# EUROPÄISCHE PATENTANMELDUNG

(11) **EP 2 843 017 A1**
(43) Veröffentlichungstag der Anmeldung: **04.03.2015**
(21) Anmeldenummer: 13181764.5
(22) Anmeldetag: 27.08.2013
(51) Int. Cl.: C09D 175/04, C08G 63/668, C08G 18/42

(54) **DIMERFETTSÄURE-POLYETHER-REAKTIONSPRODUKT UND BESCHICHTUNGSMITTEL ENTHALTEND DAS REAKTIONSPRODUKT**

(71) Anmelder: BASF Coatings GmbH, 48165 Münster (DE)
(72) Erfinder: Steinmetz, Bernhard, 97535 Rütschenhausen (DE); Hoffmann, Peter, 48308 Senden (DE); Reuter, Hardy, 48167 Münster (DE)

(57) **Zusammenfassung**

Die vorliegende Erfindung betrifft ein Reaktionsprodukt, herstellbar durch Umsetzung von
(a) Dimerfettsäuren mit
(b) mindestens einem Polyether der allgemeinen Strukturformel (I)

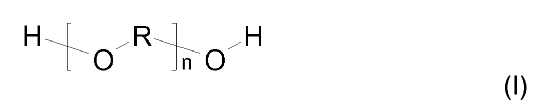

wobei es sich bei R um einen C₃-bis C₆-Alkylenrest handelt und n entsprechend so gewählt ist, dass der besagte Polyether ein zahlenmittleres Molekulargewicht von 2250 bis 6000 g/mol besitzt, die Komponenten (a) und (b) in einem molaren Verhältnis von 0,7/2,3 bis 1,6/1,7 eingesetzt werden und das resultierende Reaktionsprodukt ein zahlenmittleres Molekulargewicht von 4800 bis 40000 g/mol und eine Säurezahl von kleiner 10 mg KOH/g besitzt. Die Erfindung betrifft ferner einen pigmentierten wässrigen Basislack, welcher dieses Reaktionsprodukt enthält sowie die Verwendung des Reaktionsprodukts in pigmentierten wässrigen Basislacken zur Haftungsverbesserung. Die vorliegende Erfindung betrifft ferner ein Verfahren zur Herstellung von Mehrschichtlackierungen sowie die mit Hilfe des besagten Verfahrens herstellbaren Mehrschichtlackierungen.

## Beschreibung

Die Erfindung betrifft ein neuartiges Dimerfettsäure-Polyether-Reaktionsprodukt. Sie betrifft ferner einen pigmentierten wässrigen Basislack, welcher dieses Polymer enthält sowie die Verwendung des besagten Polymers in pigmentierten wässrigen Basislacken. Sie betrifft auch ein Verfahren zur Herstellung von Mehrschichtlackierungen unter Einsatz des pigmentierten wässrigen Basislacks sowie die mit Hilfe des besagten Verfahrens herstellbaren Mehrschichtlackierungen. Zudem betrifft die vorliegende Erfindung die Reparatur von Fehlstellen auf Mehrschichtlackierungen.

### Stand der Technik

Bekannt ist eine Vielzahl von Verfahren zur Herstellung von farb- und/oder effektgebenden mehrschichtigen Lackierungen. Aus dem Stand der Technik (vergleiche beispielsweise die deutsche Patentanmeldung DE 199 48 004 A1, Seite 17, Zeile 37, bis Seite 19, Zeile 22, oder das deutsche Patent DE 100 43 405 C1, Spalte 3, Absatz [0018], und Spalte 8, Absatz [0052], bis Spalte 9, Absatz [0057], in Verbindung mit Spalte 6, Absatz [0039], bis Spalte 8, Absatz [0050]) ist beispielsweise das folgende Verfahren bekannt, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird.

Dieses Verfahren wird beispielsweise in großem Umfang sowohl für die Erstlackierung (OEM) von Automobilen sowie der Lackierung von Metall- und Kunststoffanbauteilen eingesetzt. Dabei treten unter bestimmten Bedingungen Haftungsprobleme, insbesondere zwischen Basislackschicht und Klarlackschicht auf. Zudem wird das Verfahren auch für die Automobilreparaturlackierung von Automobilkarossen eingesetzt. Hier ist sowohl die OEM-Automobilreparaturlackierung als auch die Automobilreparaturlackierung gemeint, welche beispielsweise in einer Werkstatt stattfindet. Dabei ist vor allem die Haftung zwischen dem bei der Reparaturlackierung eingesetzten Basislack beziehungsweise der daraus hergestellten Lackschicht und der Erstlackierung problematisch. Die Eigenschaften eines Basislacks und der daraus hergestellten Lackschichten werden insbesondere von den im Basislack enthaltenen Bindemitteln und Additiven, beispielsweise speziellen Reaktionsprodukten, bestimmt.

### Aufgabe

Der vorliegenden Erfindung lag also die Aufgabe zugrunde, ein Reaktionsprodukt zur Verfügung zu stellen, mit dessen Hilfe sich Beschichtungen herstellen lassen, die die oben bezeichneten Nachteile des Standes der Technik nicht länger aufweisen. Die Haftung von Beschichtungen, insbesondere Basislackschichten sollte also sowohl bei der Lackierung von Metall- und Kunststoffsubstraten als auch bei der Autoreparaturlackierung deutlich verbessert werden. Bei der Lackierung von Metall- und Kunststoffsubstraten stand hier neben der Haftung des Basislacks auf dem Untergrund die Haftung zwischen Basislack und Klarlack im Vordergrund. Bei der Autoreparaturlackierung stand neben der Haftung zwischen Basislack und Klarlack die Haftung zwischen Basislack und Erstlackierung im Vordergrund. Diese sollte vor allem für den Einsatz in der OEM-Automobilreparaturlackierung verbessert werden. Insbesondere sollte also durch die Bereitstellung eines neuen Reaktionsprodukts und dessen Einsatz in Beschichtungsmitteln, insbesondere pigmentierten Basislacken, die Haftung dieser Basislacke an den jeweiligen Grenzflächen im Schichtverbund von Mehrschichtlackierungen verbessert werden.

Die Haftungsproblematik bei den aus dem Stand der Technik bekannten Systemen kann insbesondere dann besonders ausgeprägt sein, wenn die beschichteten Substrate der Witterung ausgesetzt sind. Die Aufgabe der vorliegenden Erfindung bestand somit auch darin, Beschichtungen zur Verfügung zu stellen, die auch, nachdem sie der Witterung ausgesetzt waren, noch hervorragende Haftungseigenschaften besitzen.

Eine schlechte Haftung manifestiert sich im Falle einer Belastung durch Witterung insbesondere im Auftreten von Blasen und Quellungen. Demnach bestand eine zentrale Aufgabe der vorliegenden Erfindung darin, dass Auftreten von Blasen und Quellungen nach Witterungseinflüssen zu reduzieren oder sogar gänzlich zu verhindern.

### Lösung

Die genannten Aufgaben konnten durch ein Dimerfettsäure-Polyether-Reaktionsprodukt gelöst werden, welches herstellbar ist durch Umsetzung von
(a) Dimerfettsäuren mit
(b) mindestens einem Polyether der allgemeinen Strukturformel (I) 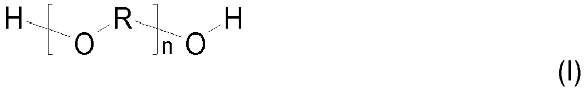
wobei es sich bei R um einen C₃- bis C₆-Alkylenrest handelt und n entsprechend so gewählt ist, dass der Polyether (b) ein zahlenmittleres Molekulargewicht von 2250 bis 6000 g/mol besitzt, die Komponenten (a) und (b) in einem molaren Verhältnis von 0,7/2,3 bis 1,6/1,7 eingesetzt werden und das resultierende Reaktionsprodukt ein zahlenmittleres Molekulargewicht von 4800 bis 40000 g/mol und eine Säurezahl von kleiner 10 mg KOH/g besitzt.

Die Bedingung, dass n so gewählt wird, dass der besagte Polyether ein zahlenmittleres Molekulargewicht von 2250 bis 6000 g/mol besitzt, sei wie folgt veranschaulicht. Handelt es sich beispielsweise bei R um einen Hexamethylenrest und soll das zahlenmittlere Molekulargewicht 3000 g/mol betragen, so liegt n im Mittel zwischen 29 und 30. Anhand der gegebenen Vorgaben weiß der Fachmann problemlos, ein entsprechendes Reaktionsprodukt herzustellen beziehungsweise auszuwählen. Davon abgesehen geben die weiter unten folgenden Beschreibung und insbesondere die Beispiele nochmals zusätzliche Informationen. Der Parameter n ist also genauso wie das zahlenmittlere Molekulargewicht als ein statistischer Mittelwert zu verstehen.

Das neue Reaktionsprodukt wird in der Folge auch als erfindungsgemäßes Reaktionsprodukt bezeichnet. Bevorzugte Ausführungsformen des erfindungsgemäßen Reaktionsprodukts gehen aus der folgenden Beschreibung sowie den Unteransprüchen hervor.

Ebenfalls Gegenstand der vorliegenden Erfindung ist ein pigmentierter wässriger Basislack enthaltend das erfindungsgemäße Reaktionsprodukt sowie die Verwendung des Reaktionsprodukts in wässrigen Basislacken zur Haftungsverbesserung. Nicht zuletzt betrifft die vorliegende Erfindung ein Verfahren zur Herstellung einer mehrschichtigen Lackierung auf einem Substrat sowie eine nach dem genannten Verfahren hergestellte Mehrschichtlackierung. Die vorliegende Erfindung betrifft auch ein Verfahren zur Reparatur von Fehlstellen auf Mehrschichtlackierungen, bei dem der erfindungsgemäße Basislack eingesetzt wird.

Durch das erfindungsgemäße Reaktionsprodukt wird eine hervorragende Haftung zwischen Basislacken beziehungsweise Basislackschichten, die das Reaktionsprodukt enthalten und dem darunter liegenden Untergrund sowie der darüber liegenden Klarlackierung erzielt. Hinzu kommt, dass zudem insbesondere eine herausragende Haftung auf Erstlackierungen beziehungsweise auf Fehlstellen aufweisenden Erstlackierungen, wobei diese Fehlstellen gegebenenfalls angeschliffen sein können, erzielt wird. Besonders gut gelingt die Minimierung von typischen Erscheinungen, die eine mangelhafte Haftung erkennen lassen, insbesondere Blasen und Quellungen in der jeweiligen Lackierung. Neben dem Bereich der Erstlackierung, insbesondere dem Bereich der Automobilindustrie, können das erfindungsgemäße Reaktionsprodukt sowie der erfindungsgemäße Basislack damit besonders gut im Bereich der Automobilreparaturlackierung eingesetzt werden.

### Komponente (a)

Das erfindungsgemäße Reaktionsprodukt wird unter Einsatz mindestens einer Dimerfettsäure (a) hergestellt.

Als Dimerfettsäuren (seit langem auch bekannt als dimerisierte Fettsäuren oder Dimersäuren) werden allgemein und insbesondere im Rahmen der vorliegenden Erfindung Gemische bezeichnet, die durch Oligomerisierung von ungesättigten Fettsäuren hergestellt werden. Sie sind beispielsweise herstellbar durch katalytische Dimerisierung von pflanzlichen, ungesättigten Fettsäuren, wobei als Ausgangsstoffe insbesondere ungesättigte C₁₂- bis C₂₂-Fettsäuren eingesetzt werden. Die Verknüpfung verläuft vornehmlich nach dem Diels-Alder-Typ und es resultieren, je nach Zahl und Lage der Doppelbindungen der zur Herstellung der Dimerfettsäuren eingesetzten Fettsäuren, Gemische aus vornehmlich dimeren Produkten, die zwischen den Carboxylgruppen cycloaliphatische, linear-aliphatische, verzweigt aliphatische und auch C₆-aromatische Kohlenwasserstoffgruppen aufweisen. Je nach Mechanismus und/oder gegebenenfalls nachträglicher Hydrierung können die aliphatischen Reste gesättigt oder ungesättigt sein und auch der Anteil von aromatischen Gruppen kann variieren. Die Reste zwischen den Carbonsäuregruppen enthalten dann beispielsweise 24 bis 44 Kohlenstoffatome. Bevorzugt werden zur Herstellung Fettsäuren mit 18 Kohlenstoffatomen eingesetzt, sodass das dimere Produkt also 36 Kohlenstoffatome aufweist. Vorzugsweise weisen die Reste, welche die Carboxylgruppen der Dimerfettsäuren verbinden, keine ungesättigten Bindungen und keine aromatischen Kohlenwasserstoffreste auf.

Im Sinne der vorliegenden Erfindung werden bei der Herstellung also bevorzugt C₁₈-Fettsäuren eingesetzt. Besonders bevorzugt werden Linolen-, Linol- und/oder Ölsäure eingesetzt.

In Abhängigkeit von der Reaktionsführung entstehen bei der oben bezeichneten Oligomerisierung Gemische, die hauptsächlich dimere, aber auch trimere Moleküle sowie monomere Moleküle und sonstige Nebenprodukte enthält. Üblicherweise wird destillativ gereinigt. Handelsübliche Dimerfettsäuren enthalten im Allgemeinen mindestens 80 Gew.-% dimere Moleküle, bis zu 19 Gew.-% trimere Moleküle und maximal 1 Gew.-% monomerer Moleküle und sonstiger Nebenprodukte.

Es ist bevorzugt, Dimerfettsäuren einzusetzen, die zu mindestens 90 Gew.-%, bevorzugt zu mindestens 95 Gew.-%, ganz besonders bevorzugt zu mindestens 98 Gew.-% aus dimeren Fettsäuremolekülen bestehen.

Im Sinne der vorliegenden Erfindung ist es bevorzugt, Dimerfettsäuren einzusetzen, die zu mindestens 90 Gew.-% aus dimeren Molekülen, weniger als 5 Gew.-% aus trimeren Molekülen und zu weniger als 5 Gew.-% aus monomeren Molekülen und sonstigen Nebenprodukten bestehen. Es ist besonders bevorzugt, Dimerfettsäuren einzusetzen, die zu 95 bis 98 Gew.-% aus dimeren Molekülen, weniger als 5 Gew.-% aus trimeren Molekülen und zu weniger als 1 Gew.-% aus monomeren Molekülen und sonstigen Nebenprodukten bestehen. Ebenfalls besonders bevorzugt werden Dimerfettsäuren eingesetzt, die zu mindestens 98 Gew.-% aus dimeren Molekülen, weniger als 1,5 Gew.-% aus trimeren Molekülen und zu weniger als 0,5 Gew.-% aus monomeren Molekülen und sonstigen Nebenprodukten bestehen. Die Bestimmung der Anteile von monomeren, dimeren und trimeren Molekülen sowie sonstigen Nebenprodukten in den Dimerfettsäuren kann beispielsweise mittels Gaschromatografie (GC) erfolgen. Dabei werden die Dimerfettsäuren vor der GC-Analyse über die Bortrifluorid-Methode zu den entsprechenden Methylestern umgesetzt (vergleiche DIN EN ISO 5509) und dann mittels GC analysiert.

Als grundlegendes Kennzeichen für "Dimerfettsäuren" gilt im Rahmen der vorliegenden Erfindung also, dass deren Herstellung die Oligomerisierung von ungesättigten Fettsäuren umfasst. Bei dieser Oligomerisierung entstehen vornehmlich, das heißt bevorzugt zu mindestens 80 Gew.-%, besonders bevorzugt zu mindestens 90 Gew.-%, ganz besonders bevorzugt zu mindestens 95 Gew.-% und insbesondere zu mindestens 98 Gew.-% dimere Produkte. Die Tatsache, dass bei der Oligomerisierung also überwiegend dimere Produkte entstehen, die genau zwei Fettsäuremoleküle enthalten, rechtfertigt diese ohnehin gängige Benennung. Ein alternativer Ausdruck für den einschlägigen Begriff "Dimerfettsäuren" ist also "Gemisch enthaltend dimerisierte Fettsäuren".

Die einzusetzenden Dimerfettsäuren sind als Handelsprodukte zu erhalten. Zu nennen sind beispielsweise Radiacid 0970, Radiacid 0971, Radiacid 0972, Radiacid 0975, Radiacid 0976 und Radiacid 0977 der Firma Oleon, Pripol 1006, Pripol 1009, Pripol 1012, und Pripol 1013 der Firma Croda, Empol 1008, Empol 1061 und Empol 1062 der Firma Cognis sowie Unidyme 10 und Unidyme TI der Firma Arizona Chemical.

### Komponente (b)

Als Komponente (b) wird mindestens ein Polyether der allgemeinen Strukturformel (I) 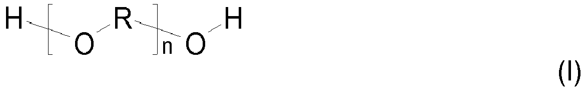 eingesetzt, wobei es sich bei R um einen C₃ bis C₆-Alkylrest handelt. Der Index n ist jeweils so zu wählen, dass der besagte Polyether ein zahlenmittleres Molekulargewicht von 2250 bis 6000 g/mol besitzt. Bevorzugt besitzt er ein zahlenmittleres Molekulargewicht von 2300 bis 5600 g/mol, besonders bevorzugt von 2400 bis 5200 g/mol und insbesondere von 2500 bis 4800 g/mol und ganz besonders bevorzugt 2700 bis 4700 g/mol. Das zahlenmittlere Molekulargewicht wird im Rahmen der vorliegenden Erfindung, sofern nicht spezifisch anders angegeben, mittels Dampfdruckosmose bestimmt. Gemessen wurde mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin Benzil als Eichsubstanz eingesetzt wurde).

Bekanntermaßen handelt es sich bei dem zahlenmittleren Molekulargewicht immer um einen statistischen Mittelwert. Selbiges muss also auch für den Parameter n gemäß Formel (I) gelten. Die in diesem Zusammenhang zu erläuternde, für die Komponente (b) gewählte Bezeichnung Polyether versteht sich wie folgt. Bei Polymeren, beispielsweise Polyethern (b), handelt es sich immer um Mischungen von verschieden großen Molekülen. Zumindest ein Teil oder alle dieser Moleküle zeichnen sich durch eine Abfolge von gleichen oder verschiedenen Monomereinheiten (als reagierte Form von Monomeren) aus. Das Polymer beziehungsweise Molekülgemisch enthält also grundsätzlich Moleküle, die mehrere (das heißt mindestens zwei) gleiche oder verschiedene Monomereinheiten enthalten. Selbstverständlich können in dem Gemisch auch anteilig die Monomere selbst enthalten sein, das heißt also in ihrer nicht reagierten Form. Dies bedingt bekanntermaßen allein die in der Regel molekular nicht einheitlich ablaufende Herstellungsreaktion, das heißt Polymerisation von Monomeren. Während einem bestimmten Monomer ein diskretes Molekulargewicht zuzuordnen ist, ist ein Polymer also immer eine Mischung von Molekülen, die sich in ihrem Molekulargewicht unterscheiden. Ein Polymer kann daher nicht durch ein diskretes Molekulargewicht beschrieben werden, sondern ihm werden bekanntermaßen immer mittlere Molekulargewichte, beispielsweise das oben genannten zahlenmittlere Molekulargewicht, zugeordnet.

In dem erfindungsgemäß einzusetzenden Polyether können alle n Reste R gleich sein. Ebenso ist es aber auch möglich, dass unterschiedliche Arten von Resten R vorhanden sind. Bevorzugt sind alle Reste R gleich.

Bei R handelt es sich bevorzugt um einen C₃- oder einen C₄-Alkylenrest. Besonders bevorzugt handelt es sich um einen iso-Propylen- oder einen Tetramethylenrest.

Ganz besonders bevorzugt handelt es sich bei dem erfindungsgemäß einzusetzenden Polyether um Polypropylenglycol oder um Polytetrahydrofuran.

### Das Reaktionsprodukt

Die Herstellung des erfindungsgemäßen Reaktionsproduktes weist keine Besonderheiten auf. Die Komponenten (a) und (b) werden über allgemein bekannte Veresterung miteinander verknüpft. Umgesetzt werden also die Carboxylgruppen der Komponente (a) mit den Hydroxylgruppen der Komponente (b). Die Umsetzung kann beispielsweise in Masse oder in Lösung mit typischen organischen Lösemitteln bei Temperaturen von beispielsweise 50°C bis 300°C, Selbstverständlich können auch typische Katalysatoren wie Schwefelsäure, Sulfonsäuren und/oder Tetraalkyltitanate, Zink- beziehungsweise Zinnalkoxylate, Dialkylzinnoxide wie beispielsweise Di-n-butylzinnoxid oder organische Salze der Dialkylzinnoxide zum Einsatz kommen. Üblicherweise erfolgt auch der Einsatz eines Wasserabscheiders zum Auffangen des bei der Kondensationsreaktion anfallenden Wassers.

Dabei werden die Komponenten (a) und (b) in einem molaren Verhältnis von 0,7/2,3 bis 1,6/1,7 bevorzugt von 0,8/2,2 bis 1,6/1,8 und ganz besonders bevorzugt von 0,9/2,1 bis 1,5/1,8 eingesetzt. Die Reaktion wird abgebrochen, wenn das erfindungsgemäße Reaktionsprodukt eine Säurezahl von kleiner 10 mg KOH/g besitzt. Bevorzugt besitzt es eine Säurezahl von kleiner 7,5 mg KOH/g und ganz besonders bevorzugt von kleiner 5 mg KOH/g. Die Säurezahl wird gemäß DIN 53402 bestimmt.

Das resultierende Reaktionsprodukt besitzt ein zahlenmittleres Molekulargewicht von 4800 bis 40000 g/mol, bevorzugt 5000 bis 30000 g/mol, ganz besonderes bevorzugt 5500 bis 20000 g/mol und insbesondere 6000 bis 12000 g/mol.

Die erfindungsgemäßen Reaktionsprodukte besitzen in der Regel eine geringe Wasserlöslichkeit. Werden sie in wässrigen Systemen eingesetzt, so reichern sie sich beispielsweise aufgrund ihrer Unverträglichkeit an den Grenzflächen an und sind somit in der Lage zu einer Verbesserung der Haftung zu angrenzenden Schichten beizutragen.

Das erfindungsgemäße Reaktionsprodukt ist in der Regel hydroxyfunktionell, bevorzugt dihydroxyfunktionell.

Besonders bevorzugte Ausführungsformen werden im Folgenden genannt:
a) In einer besonders bevorzugten Ausführungsform des erfindungsgemäßen Reaktionsprodukts wird die Dimerfettsäure aus Linolen-, Linol- und/oder Ölsäure hergestellt und besteht zu mindestens 98 Gew.-% aus dimeren Molekülen, weniger als 1,5 Gew.-% aus trimeren Molekülen und zu weniger als 0,5 Gew.-% aus monomeren Molekülen und sonstigen Nebenprodukten.
b) In einer weiteren besonders bevorzugten Ausführungsform des erfindungsgemäßen Reaktionsprodukts handelt es sich bei dem erfindungsgemäß einzusetzenden Polyether um Polypropylenglycol oder um Polytetrahydrofuran und er besitzt zudem ein zahlenmittleres Molekulargewicht von 2500 bis 4800 g/mol.
c) In einer weiteren besonders bevorzugten Ausführungsform des erfindungsgemäßen Reaktionsprodukts werden die Komponenten (a) und (b) in einem molaren Verhältnis von 0,9/2,1 bis 1,5/1,8 eingesetzt.
d) In einer weiteren besonders bevorzugten Ausführungsform des erfindungsgemäßen Reaktionsprodukts besitzt dieses eine Säurezahl von kleiner 5 mg KOH/g.
e) In einer weiteren besonders bevorzugten Ausführungsform des erfindungsgemäßen Reaktionsprodukts besitzt dieses ein zahlenmittleres Molekulargewicht von 6000 bis 12000 g/mol.

In einer ganz besonders bevorzugten Ausführungsform des erfindungsgemäßen Reaktionsprodukts sind alle die unter a) bis e) angegebenen Merkmale in Kombination realisiert.

### Der pigmentierte wässrige Basislack

Die vorliegende Erfindung betrifft ferner einen pigmentierten wässrigen Basislack, welcher mindestens ein erfindungsgemäßes Reaktionsprodukt enthält.

Unter einem Basislack ist ein in der Automobillackierung und allgemeinen Industrielackierung eingesetzter farbgebender Zwischenbeschichtungsstoff zu verstehen. Dieser wird im Allgemeinen auf einem mit Füller oder Grundierfüller vorbehandelten Metall- oder Kunststoffuntergrund, mitunter auch direkt auf dem Kunststoffuntergrund aufgebracht. Auch Altlackierungen, welche gegebenenfalls noch vorbehandelt werden müssen (beispielsweise durch Anschleifen), können als Untergründe dienen. Mittlerweile ist es durchaus üblich, mehr als eine Basislackschicht aufzutragen. Dementsprechend stellt in einem solchen Fall eine erste Basislackschicht den Untergrund für eine zweite dar. Um eine Basislackschicht insbesondere gegen Umwelteinflüsse zu schützen, wird auf dieser mindestens noch eine zusätzliche Klarlackschicht appliziert.

Die Summe über die gewichtsprozentualen Anteile, bezogen auf das Gesamtgewicht des pigmentierten wässrigen Basislacks, aller erfindungsgemäßen Reaktionsprodukte beträgt bevorzugt 0,1 bis 30 Gew.-%, besonders bevorzugt 1 bis 20 Gew.-% und ganz besonders bevorzugt 1,5 bis 15 Gew.-% oder sogar 2 bis 12 Gew.-%.

Liegt der Gehalt des erfindungsgemäßen Reaktionsprodukts unter 0,1 Gew.-% so ist es gegebenenfalls möglich, dass keine Verbesserung der Haftung mehr erzielt wird. Liegt der Gehalt bei mehr als 30 Gew.-% so können unter Umständen Nachteile auftreten, wie zum Beispiel eine Inkompatibilität des besagten Reaktionsprodukts im Basislack. Eine solche Inkompatibilität kann sich beispielsweise durch ungleichmäßigen Verlauf sowie durch Ausschwimmen oder Absetzen zeigen.

Wie oben bereits beschrieben, ist das erfindungsgemäße Reaktionsprodukt in der Regel in wässrigen Systemen schwer löslich. Es wird daher bevorzugt direkt bei der Herstellung des pigmentieren wässrigen Basislacks eingesetzt und nicht erst nach erfolgter Herstellung in den ansonsten fertigen Basislack hinzugegeben.

In einer bevorzugten Ausführungsform beträgt die Summe über die gewichtsprozentualen Anteile aller erfindungsgemäßen Reaktionsprodukte 0,1 bis 30 Gew.-% bezogen auf das Gesamtgewicht des pigmentierten wässrigen Basislacks. Für den Fall, dass bevorzugte Ausführungsformen der erfindungsgemäßen Reaktionsprodukte eingesetzt werden, beträgt die Summe über die gewichtsprozentualen Anteile aller bevorzugten Ausführungsformen der erfindungsgemäßen Reaktionsprodukte bevorzugt ebenfalls 0,1 bis 30 Gew.-% bezogen auf das Gesamtgewicht des pigmentierten wässrigen Basislacks. Besonders bevorzugt enthält der pigmentierte wässrige Basislack als erfindungsgemäße Reaktionsprodukte ausschließlich bevorzugte Ausführungsformen der erfindungsgemäßen Reaktionsprodukte.

In einer bevorzugten Ausführungsform beträgt die Summe über die gewichtsprozentualen Anteile aller erfindungsgemäßen Reaktionsprodukte 1 bis 20 Gew.-% bezogen auf das Gesamtgewicht des pigmentierten wässrigen Basislacks. Für den Fall, dass bevorzugte Ausführungsformen der erfindungsgemäßen Reaktionsprodukte eingesetzt werden, beträgt die Summe über die gewichtsprozentualen Anteile aller bevorzugten Ausführungsformen der erfindungsgemäßen Reaktionsprodukte bevorzugt ebenfalls 1 bis 20 Gew.-% bezogen auf das Gesamtgewicht des pigmentierten wässrigen Basislacks. Besonders bevorzugt enthält der pigmentierte wässrige Basislack als erfindungsgemäße Reaktionsprodukte ausschließlich bevorzugte Ausführungsformen der erfindungsgemäßen Reaktionsprodukte.

In einer ganz besonders bevorzugten Ausführungsform beträgt die Summe über die gewichtsprozentualen Anteile aller erfindungsgemäßen Reaktionsprodukte 1,5 bis 15 Gew.-% bezogen auf das Gesamtgewicht des pigmentierten wässrigen Basislacks. Für den Fall, dass bevorzugte Ausführungsformen der erfindungsgemäßen Reaktionsprodukte eingesetzt werden, beträgt die Summe über die gewichtsprozentualen Anteile aller bevorzugten Ausführungsformen der erfindungsgemäßen Reaktionsprodukte bevorzugt ebenfalls 1,5 bis 15 Gew.-% bezogen auf das Gesamtgewicht des pigmentierten wässrigen Basislacks. Besonders bevorzugt enthält der pigmentierte wässrige Basislack als erfindungsgemäße Reaktionsprodukte ausschließlich bevorzugte Ausführungsformen der erfindungsgemäßen Reaktionsprodukte.

In einer ebenfalls ganz besonders bevorzugten Ausführungsform beträgt die Summe über die gewichtsprozentualen Anteile aller erfindungsgemäßen Reaktionsprodukte 2 bis 12 Gew.-% bezogen auf das Gesamtgewicht des pigmentierten wässrigen Basislacks. Für den Fall, dass bevorzugte Ausführungsformen der erfindungsgemäßen Reaktionsprodukte eingesetzt werden, beträgt die Summe über die gewichtsprozentualen Anteile aller bevorzugten Ausführungsformen der erfindungsgemäßen Reaktionsprodukte bevorzugt ebenfalls 2 bis 12 Gew.-% bezogen auf das Gesamtgewicht des pigmentierten wässrigen Basislacks. Besonders bevorzugt enthält der pigmentierte wässrige Basislack als erfindungsgemäße Reaktionsprodukte ausschließlich bevorzugte Ausführungsformen der erfindungsgemäßen Reaktionsprodukte.

Als Beispiele für in diesem Sinne bevorzugte Ausführungsformen der erfindungsgemäßen Reaktionsprodukte seien die folgenden besonders bevorzugten Ausführungsformen genannt:
a) In einer besonders bevorzugten Ausführungsform des erfindungsgemäßen Reaktionsprodukts wird die Dimerfettsäure aus Linolen-, Linol- und/oder Ölsäure hergestellt und besteht zu mindestens 98 Gew.-% aus dimeren Molekülen, weniger als 1,5 Gew.-% aus trimeren Molekülen und zu weniger als 0,5 Gew.-% aus monomeren Molekülen und sonstigen Nebenprodukten.
b) In einer weiteren besonders bevorzugten Ausführungsform des erfindungsgemäßen Reaktionsprodukts handelt es sich bei dem erfindungsgemäß einzusetzenden Polyether um Polypropylenglycol oder um Polytetrahydrofuran und er besitzt zudem ein zahlenmittleres Molekulargewicht von 2500 bis 4800 g/mol.
c) In einer weiteren besonders bevorzugten Ausführungsform des erfindungsgemäßen Reaktionsprodukts werden die Komponenten (a) und (b) in einem molaren Verhältnis von 0,9/2,1 bis 1,5/1,8 eingesetzt.
d) In einer weiteren besonders bevorzugten Ausführungsform des erfindungsgemäßen Reaktionsprodukts besitzt dieses eine Säurezahl von < 5 mg KOH/g.
e) In einer weiteren besonders bevorzugten Ausführungsform des erfindungsgemäßen Reaktionsprodukts besitzt dieses ein zahlenmittleres Molekulargewicht von 6000 bis 12000 g/mol.

Als weiteres Beispiel für in diesem Sinne bevorzugte Ausführungsformen der erfindungsgemäßen Reaktionsprodukte seien jene genannt, welche alle die unter a) bis e) angegebenen Merkmale in Kombination realisieren.

Die erfindungsgemäß eingesetzten Basislacke enthalten farb- und/oder effektgebende Pigmente. Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Der Anteil der Pigmente kann beispielsweise im Bereich von 1 bis 40 Gew.-%, bevorzugt 2 bis 30 Gew.-%, besonders bevorzugt 3 bis 25 Gew.-%, bezogen auf das Gesamtgewicht des pigmentierten wässrigen Basislacks, liegen.

Im Rahmen der vorliegenden Erfindung sind Basislacke bevorzugt, die als Bindemittel physikalisch, thermisch oder thermisch und mit aktinischer Strahlung härtbare Polymere enthalten. Als Bindemittel wird im Rahmen der vorliegenden Erfindung gemäß einschlägiger DIN EN ISO 4618 der nichtflüchtige Anteil eines Beschichtungsmittels ohne Pigmente und Füllstoffe verstanden. Spezielle Bindemittel sind demnach beispielsweise auch lacktypische Additive, das erfindungsgemäße Reaktionsprodukt oder weiter unten beschriebene typische Vernetzungsmittel, auch wenn der Ausdruck im Folgenden hauptsächlich in Bezug auf bestimmte physikalisch, thermisch oder thermisch und mit aktinischer Strahlung härtbare Polymere, beispielsweise bestimmte Polyurethanharze, verwendet wird.

Neben dem erfindungsgemäßen Reaktionsprodukt enthalten die erfindungsgemäßen pigmentierten wässrigen Basislacke besonders bevorzugt mindestens ein Polyurethanharz als Bindemittel. Derartige Polyurethanharze enthaltende Lacke können ebenfalls üblicherweise physikalisch, thermisch oder thermisch und mit aktinischer Strahlung gehärtet werden.

Im Rahmen der vorliegenden Erfindung bedeutet der Begriff "physikalische Härtung" die Bildung eines Films durch Abgabe von Lösemittel aus Polymerlösungen oder Polymerdispersionen. Üblicherweise sind hierfür keine Vernetzungsmittel notwendig.

Im Rahmen der vorliegenden Erfindung bedeutet der Begriff "thermische Härtung" die durch Wärme initiierte Vernetzung einer Lackschicht, bei der in dem zugrunde liegenden Lack entweder ein separat vorliegendes Vernetzungsmittel oder aber selbstvernetzende Bindemittel angewandt werden. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, d.h. Gruppen, die mit Gruppen derselben Art reagieren, bereits in den Bindemittelmolekülen vorhanden, liegen selbstvernetzende Bindemittel vor. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28 bis Seite 9, Zeilen 24 bekannt.

Im Rahmen der vorliegenden Erfindung ist unter aktinischer Strahlung elektromagnetische Strahlung wie nahes Infrarot (NIR), UV-Strahlung, insbesondere UV-Strahlung, und Korpuskularstrahlung wie Elektronenstrahlung zu verstehen. Die Härtung durch UV-Strahlung wird üblicherweise durch radikalische oder kationische Photoinitiatoren initiiert.

Werden die thermische Härtung und die Härtung mit aktinischem Licht gemeinsam angewandt, spricht man auch von "Dual Cure".

In der vorliegenden Erfindung sind sowohl Basislacke bevorzugt, die physikalisch, als auch solche die thermisch oder thermisch und mit aktinischer Strahlung, also mittels "Dual Cure", härtbar sind.

Als thermisch härtende Basislacke sind solche bevorzugt, die als Bindemittel ein Polyurethanharz, bevorzugt ein hydroxygruppenhaltiges Polyurethanharz, und als Vernetzungsmittel ein Aminoplastharz oder ein blockiertes oder unblockiertes Polyisocyanat, bevorzugt ein Aminoplastharz, enthalten. Unter den Aminoplastharzen sind Melaminharze bevorzugt.

Die Summe über die gewichtsprozentualen Anteile, bezogen auf das Gesamtgewicht des pigmentierten wässrigen Basislacks, aller Vernetzungsmittel, bevorzugt Aminoplastharze und/oder blockierte und/oder unblockierte Polyisocyanat, insbesondere bevorzugt Melaminharze, beträgt bevorzugt 1 bis 20 Gew.-%, besonders bevorzugt 1,5 bis 17,5 Gew.-% und ganz besonders bevorzugt 2 bis 15 Gew.-% oder sogar 2,5 bis 10 Gew.-%.

Das bevorzugt enthaltene Polyurethanharz kann ionisch und/oder nicht ionisch hydrophil stabilisiert sein. In bevorzugten Ausführungsformen der vorliegenden Erfindung ist das Polyurethanharz ionisch hydrophil stabilisiert. Die bevorzugten Polyurethanharze sind linear oder enthalten Verzweigungen. Besonders bevorzugt handelt es sich um ein Polyurethanharz, in dessen Gegenwart olefinisch ungesättigte Monomere polymerisiert wurden. Das Polyurethanharz kann dabei neben dem aus der Polymerisation der olefinisch ungesättigten Monomere hervorgegangenen Polymer vorliegen ohne dass diese kovalent miteinander verbunden sind. Ebenso kann das Polyurethanharz aber auch mit dem aus der Polymerisation der olefinisch ungesättigten Monomere hervorgegangenen Polymer kovalent verbunden sein. Bei den olefinisch ungesättigten Monomeren handelt es sich bevorzugt um Acrylat- und/oder Methacrylatgruppenhaltige Monomere. Ebenfalls bevorzugt ist, dass die Acrylat- und/oder Methacrylatgruppenhaltigen Monomere in Kombination mit weiteren olefinisch ungesättigten Verbindungen eingesetzt werden, welche keine Acrylat- oder Methacrylatgruppen enthalten. Besonders bevorzugt werden als olefinisch ungesättigte Monomere Acrylat- oder Methacrylatgruppen-haltige Monomere an das Polyurethanharz gebunden, wodurch Polyurethan(meth)acrylate entstehen. Ganz besonders bevorzugt ist das Polyurethanharz ein Polyurethan(meth)acrylat. Das bevorzugt enthaltene Polyurethanharz ist physikalisch, thermisch oder thermisch und mit aktinischer Strahlung härtbar. Insbesondere ist es thermisch oder thermisch und mit aktinischer Strahlung härtbar. Besonders bevorzugt umfasst das Polyurethanharz reaktive funktionelle Gruppen, durch die eine Fremdvernetzung möglich ist.

Geeignete gesättigte oder ungesättigte Polyurethanharze werden beispielsweise beschrieben in
- der deutschen Patentanmeldung DE 199 14 896 A1, Spalte 1, Zeilen 29 bis 49 und Spalte 4, Zeile 23 bis Spalte 11, Zeile 5,
- der deutschen Patentanmeldung DE 199 48 004 A1, Seite 4, Zeile 19 bis Seite 13, Zeile 48,
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32.

Für die Herstellung des Polyurethanharzes werden vorzugsweise die dem Fachmann bekannten aliphatischen, cycloaliphatischen, aliphatisch-cycloaliphatischen, aromatischen, aliphatisch-aromatischen und/oder cycloaliphatisch-aromatischen Polyisocyanate eingesetzt.

Als Alkohol-Komponente für die Herstellung der Polyurethanharze werden bevorzugt die dem Fachmann bekannten, gesättigten und ungesättigten höhermolekularen und niedermolekularen Polyole sowie gegebenenfalls auch Monoalkohole in untergeordneten Mengen eingesetzt. Als niedermolekulare Polyole werden insbesondere Diole und in untergeordneten Mengen Triole zur Einführung von Verzweigungen eingesetzt. Beispiele geeigneter höhermolekularer Polyole sind gesättigte oder olefinisch ungesättigte Polyesterpolyole und/oder Polyetherpolyole. Insbesondere werden als höhermolekulare Polyole Polyesterpolyole, insbesondere solche mit einem zahlenmittleren Molekulargewicht von 400 bis 5000 g/mol.

Zur hydrophilen Stabilisierung beziehungsweise zur Erhöhung der Dispergierbarkeit in wässrigem Medium kann das bevorzugt enthaltene Polyurethanharz bestimmte ionische Gruppen und/oder Gruppen, die in ionische Gruppen überführt werden können (potentiell ionische Gruppen), enthalten. Solche Polyurethanharze werden im Rahmen der vorliegenden Erfindung als ionisch hydrophil stabilisierte Polyurethanharze bezeichnet. Ebenfalls enthalten sein können nicht ionische hydrophil modifizierende Gruppen. Bevorzugt sind aber die ionisch hydrophil stabilisierten Polyurethane. Genauer handelt es sich bei den modifizierenden Gruppen entweder um
- funktionelle Gruppen, die durch Neutralisationsmittel und/oder Quaternisierungsmittel in Kationen überführt werden können, und/oder kationische Gruppen (kationische Modifizierung)
   oder
- funktionelle Gruppen, die durch Neutralisationsmittel in Anionen überführt
   werden können, und/oder anionische Gruppen (anionische Modifizierung) und/oder
- nicht ionische hydrophile Gruppen (nicht-ionische Modifizierung).

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die (potentiell) ionischen Gruppen enthalten, in das Polyurethanharz eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxygruppe, enthalten. Zur Einführung der ionischen Modifizierung können Monomere eingesetzt werden, die neben den modifizierenden Gruppen mindestens eine Hydroxygruppe enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Vorzugsweise kann es sich bei dem Polyurethanharz um ein Pfropfpolymer handeln. Insbesondere handelt es sich um ein mittels olefinisch ungesättigten Verbindungen, vorzugsweise olefinisch ungesättigten Monomeren, gepfropftes Polyurethanharz. In diesem Fall ist das Polyurethan also beispielsweise mit Seitengruppen und/oder Seitenketten gepfropft, die auf olefinisch ungesättigten Monomeren basieren. Insbesondere handelt es sich um Seitenketten, die auf Poly(meth)acrylaten basieren. Als Poly(meth)acrylate werden im Rahmen der vorliegenden Erfindung Polymere beziehungsweise polymere Reste bezeichnet, die Acrylat- und/oder Methacrylatgruppen-haltige Monomere umfassen, vorzugsweise aus Acrylat- und/oder Methacrylatgruppen-haltigen Monomeren bestehen. Unter Seitenketten, die auf Poly(meth)acrylaten basieren, sind Seitenketten zu verstehen, die bei der Pfropfpolymerisation unter Einsatz von (Meth)acrylatgruppen-haltigen Monomeren aufgebaut werden. Dabei werden bei der Pfropfpolymerisation vorzugsweise mehr als 50 mol-%, insbesondere mehr als 75 mol-%, insbesondere 100 mol.-%, bezogen auf die Gesamtmenge der bei der Pfropfpolymerisation eingesetzten Monomere, an (Meth)acrylatgruppen-haltigen Monomeren eingesetzt.

Die beschriebenen Seitenketten werden bevorzugt nach der Herstellung einer Polyurethanharz-Primärdispersion in das Polymer eingeführt. In diesem Fall kann das in der Primärdispersion vorliegende Polyurethanharz seiten- und/oder endständige olefinisch ungesättigte Gruppen enthalten, über die dann die Pfropfpolymerisation mit den olefinisch ungesättigten Verbindungen verläuft. Das zu pfropfende Polyurethanharz kann also ein ungesättigtes Polyurethanharz (A) sein. Bei der Pfropfpolymerisation handelt es sich dann um eine radikalische Polymerisation olefinisch ungesättigter Reaktionspartner. Möglich ist beispielsweise auch, dass die zur Pfropfpolymerisation eingesetzten olefinisch ungesättigten Verbindungen mindestens eine Hydroxygruppe enthalten. Dann kann auch zunächst eine Anbindung der olefinisch ungesättigten Verbindungen über diese Hydroxygruppen durch Reaktion mit freien Isocyanatgruppen des Polyurethanharzes erfolgen. Diese Anbindung findet anstelle oder neben der radikalischen Reaktion der olefinisch ungesättigten Verbindungen mit den gegebenenfalls vorhandenen seiten- und/oder endständigen olefinisch ungesättigten Gruppen des Polyurethanharzes statt. Danach folgt dann wieder die Pfropfpolymerisation über radikalische Polymerisation wie sie weiter oben beschrieben wurde. Erhalten werden jedenfalls mit olefinisch ungesättigten Verbindungen, vorzugsweise olefinisch ungesättigten Monomeren, gepfropfte Polyurethanharze.

Als olefinisch ungesättigte Verbindungen, mit denen das Polyurethanharz (A) bevorzugt gepfropft wird, können praktisch alle radikalisch polymerisierbaren, olefinisch ungesättigten und organischen Monomere eingesetzt werden, die dem Fachmann für diese Zwecke zur Verfügung stehen. Beispielhaft seien einige bevorzugte Monomerklassen genannt:
- Hydroxyalkylester der (Meth)acrylsäure oder anderer alpha, beta -ethylenisch ungesättigter Carbonsäuren,
- (Meth)acrylsäurealkylester und/oder -cycloalkylester mit bis zu 20 Kohlenstoffatomen im Alkylrest,
- Ethylenisch ungesättigte Monomere, enthaltend mindestens eine Säuregruppe, insbesondere genau eine Carboxylgruppe, wie beispielsweise (Meth)acrylsäure,
- Vinylester von in alpha-Stellung verzweigten Monocarbonsäuren mit 5 bis 18 Kohlenstoffatomen,
- Umsetzungsprodukte aus (Meth)acrylsäure mit dem Glycidylester einer in alpha-Stellung verzweigten Monocarbonsäure mit 5 bis 18 Kohlenstoffatomen,
- Weitere ethylenisch ungesättigte Monomere wie Olefine (beispielsweise Ethylen), (Meth)acrylsäureamide, vinylaromatische Kohlenwasserstoffe (beispielsweise Styrol), Vinylverbindungen wie Vinylchlorid und/oder Vinylether wie Ethylvinylether.

Bevorzugt werden (Meth)acrylatgruppen-haltige Monomere eingesetzt, sodass das es sich bei den aufgepfropften Seitenketten um Poly(meth)acrylat-basierende Seitenketten handelt.

Die seiten- und/oder endständigen olefinisch ungesättigten Gruppen in dem Polyurethanharz, über die die Pfropfpolymerisation mit den olefinisch ungesättigten Verbindungen verlaufen kann, werden bevorzugt über bestimmte Monomere in das Polyurethanharz eingeführt. Diese bestimmten Monomere enthalten neben einer olefinisch ungesättigten Gruppe beispielsweise noch mindestens eine gegenüber Isocyanatgruppen reaktive Gruppe. Bevorzugt sind Hydroxygruppen sowie primäre und sekundäre Aminogruppen. Insbesondere bevorzugt sind Hydroxygruppen.

Natürlich können die beschriebenen Monomere, durch welche die seiten- und/oder endständigen olefinisch ungesättigten Gruppen in das Polyurethanharz eingeführt werden können, auch zum Einsatz kommen, ohne dass das Polyurethanharz danach noch zusätzlich mit olefinisch ungesättigten Verbindungen gepfropft wird. Bevorzugt ist allerdings, dass das Polyurethanharz mit olefinisch ungesättigten Verbindungen gepfropft ist.

Das bevorzugt enthaltene Polyurethanharz kann ein selbst- und/oder fremdvernetzendes Bindemittel sein. Bevorzugt umfasst das Polyurethanharz reaktive funktionelle Gruppen, durch die eine Fremdvernetzung möglich ist. In diesem Fall ist in dem pigmentierten wässrigen Basislack bevorzugt mindestens ein Vernetzungsmittel enthalten. Insbesondere handelt es sich bei den reaktiven funktionellen Gruppen, durch die eine Fremdvernetzung möglich ist, um Hydroxygruppen. Besonders vorteilhaft sind im Rahmen des erfindungsgemäßen Verfahrens polyhydroxyfunktionelle Polyurethanharze einsetzbar. Dies bedeutet, dass das Polyurethanharz im Mittel mehr als eine Hydroxygruppe pro Molekül enthält.

Die Herstellung des Polyurethanharzes erfolgt nach den üblichen Methoden der Polymerchemie. Gemeint sind dabei beispielsweise die Polymerisation von Polyisocyanaten und Polyolen zu Polyurethanen und die bevorzugt dann folgende Pfropfpolymerisation mit olefinisch ungesättigten Verbindungen. Diese Methoden sind dem Fachmann bekannt und können individuell angepasst werden. Beispielhafte Herstellungsverfahren und Reaktionsbedingungen sind der europäischen Patentschrift EP 0521 928 B1, Seite 2, Zeile 57 bis Seite 8, Zeile 16 zu entnehmen.

Das bevorzugt enthaltene Polyurethanharz besitzt vorzugsweise ein zahlenmittleres Molekulargewicht von 200 bis 30000 g/mol, bevorzugt von 2000 bis 20000 g/mol. Es besitzt zudem beispielsweise eine Hydroxylzahl von 0 bis 250 mg KOH/g, insbesondere aber von 20 bis 150 mg KOH/g. Die Säurezahl des Polyurethanharzes liegt bevorzugt bei 5 bis 200 mg KOH/g, insbesondere bei 10 bis 40 mg KOH/g. Die Hydroxylzahl wird im Rahmen der vorliegenden Erfindung nach DIN 53240, die Säurezahl gemäß DIN 53402 bestimmt.

Der Polyurethanharzgehalt liegt bevorzugt zwischen 5 und 80 Gew.-%, besonders bevorzugt zwischen 8 und 70 Gew.-% und besonders bevorzugt zwischen 10 und 60 Gew.-%, jeweils bezogen auf den filmbildenden Festkörper des Basislacks.

Unter filmbildendem Festkörper, welcher letztlich dem Bindemittelanteil entspricht, ist der nichtflüchtige Gewichtsanteil des Basislacks ohne Pigmente und gegebenenfalls Füllstoffe zu verstehen. Der filmbildende Festkörper ist folgendermaßen bestimmbar: Eine Probe des pigmentierten wässrigen Basislacks (etwa 1 g) wird mit der 50 bis 100-fachen Menge Tetrahydrofuran versetzt und dann etwa 10 Minuten gerührt. Anschließend werden die unlöslichen Pigmente und gegebenenfalls Füllstoffe abfiltriert, der Rückstand mit wenig THF nachgespült und von dem so erhaltenen Filtrat das THF am Rotationsverdampfer entfernt. Der Rückstand des Filtrats wird zwei Stunden bei 120°C getrocknet und der dabei resultierende filmbildende Festkörper ausgewogen.

Die Summe über die gewichtsprozentualen Anteile, bezogen auf das Gesamtgewicht des pigmentierten wässrigen Basislacks, aller Polyurethanharze beträgt bevorzugt 2 bis 40 Gew.-%, besonders bevorzugt 2,5 bis 30 Gew.-% und ganz besonders bevorzugt 3 bis 20 Gew.-%.

Der einzusetzende pigmentierte wässrige Basislack kann zudem mindestens einen von den erfindungsgemäßen Reaktionsprodukten verschiedenen Polyester, insbesondere einen Polyester mit einem zahlenmittleren Molekulargewicht von 400 bis 5000 g/mol als Bindemittel enthalten. Entsprechende Polyester werden beispielsweise in DE 4009858 in Spalte 6, Zeile 53 bis Spalte 7, Zeile 61 und Spalte 10, Zeile 24 bis Spalte 13, Zeile 3 beschrieben.

Bevorzugt ist zudem ein Verdicker enthalten. Als Verdicker eignen sich anorganische Verdicker aus der Gruppe der Schichtsilikate. Neben den anorganischen Verdickern können jedoch auch ein oder mehrere organische Verdicker eingesetzt werden. Diese werden vorzugsweise gewählt aus der Gruppe bestehend aus (Meth)acrylsäure-(Meth)acrylat-Copolymerisat-Verdickern, wie beispielsweise dem Handelsprodukt Rheovis AS S130 (BASF) und Polyurethanverdickern, wie beispielsweise dem Handelsprodukt Rheovis PU 1250 (BASF). Die eingesetzten Verdicker sind von den eingesetzten Bindemitteln verschieden.

Darüber hinaus kann der pigmentierte wässrige Basislack noch mindestens einen Zusatzstoff enthalten. Beispiele für derartige Zusatzstoffe sind rückstandsfrei oder im Wesentlichen rückstandsfrei thermisch zersetzbare Salze, von Polyurethanharzen verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel.

Geeignete Zusatzstoffe der vorstehend genannten Art sind beispielsweise aus
- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033],
   bekannt. Sie werden in den üblichen und bekannten Mengen eingesetzt.

Der Festkörpergehalt der erfindungsgemäßen Basislacke kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke bei 5 bis 70 Gew.-%, besonders bevorzugt bei 8 bis 60 Gew.-% und ganz besonders bevorzugt bei 12 bis 55 Gew.-%.

Unter Festkörpergehalt (nicht-flüchtiger Anteil) ist derjenige Gewichtsanteil zu verstehen, der unter festgelegten Bedingungen beim Eindampfen als Rückstand verbleibt. In der vorliegenden Anmeldung wird der Festkörper nach DIN EN ISO 3251 bestimmt. Dazu wird der Basislack für 60 Minuten bei 130°C eingedampft.

Diese Prüfmethode wird, sofern nicht anders angegeben, ebenfalls angewandt, um beispielsweise den Anteil verschiedener Komponenten des Basislacks am Gesamtgewicht des Basislacks zu bestimmen. So kann beispielsweise der Festkörper einer Dispersion eines Polyurethanharzes, welches dem Basislack zugegeben werden soll, entsprechend bestimmt werden, um den Anteil dieses Polyurethanharzes an der Gesamtkomposition zu ermitteln.

Der erfindungsgemäße Basislack ist wässrig. Der Ausdruck "wässrig" ist dem Fachmann in diesem Zusammenhang bekannt. Gemeint ist grundsätzlich ein Basislack, der nicht ausschließlich auf organischen Lösemitteln basiert, das heißt nicht ausschließlich als Lösemittel solche auf organischer Basis enthält, sondern der im Gegenteil als Lösemittel einen signifikanten Anteil Wasser enthält. Bevorzugt ist "wässrig" im Rahmen der vorliegenden Erfindung so zu verstehen, dass das jeweilige Beschichtungsmittel, insbesondere der Basislack, einen Anteil von mindestens 40 Gew.-%, bevorzugt mindestens 50 Gew.-%, ganz besonders bevorzugt mindestens 60 Gew.-% Wasser, jeweils bezogen auf die Gesamtmenge der enthaltenen Lösemittel (das heißt Wasser und organische Lösemittel), aufweist. Darunter bevorzugt beträgt der Anteil an Wasser 40 bis 90 Gew.-%, insbesondere 50 bis 80 Gew.-%, ganz besonders bevorzugt 60 bis 75 Gew.-%, jeweils bezogen auf die Gesamtmenge der enthaltenen Lösemittel.

Die Herstellung der erfindungsgemäß eingesetzten Basislacke kann unter Einsatz der für die Herstellung von Basislacken üblichen und bekannten Mischverfahren und Mischaggregaten erfolgen.

### Das erfindungsgemäße Verfahren und die erfindungsgemäße Mehrschichtlackierung

Ein weiterer Aspekt der vorliegenden Erfindung ist ein Verfahren zur Herstellung einer mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
welches dadurch gekennzeichnet ist, dass in Stufe (1) ein pigmentierter wässriger Basislack eingesetzt wird, welcher mindestens ein erfindungsgemäßes Reaktionsprodukt enthält. Alle vorstehend genannten Ausführungen hinsichtlich des erfindungsgemäßen Reaktionsprodukts und des pigmentierten wässrigen Basislacks gelten auch für das erfindungsgemäße Verfahren. Dies gilt insbesondere auch für alle bevorzugten, besonders bevorzugten und ganz besonders bevorzugten Merkmale.

Das besagte Verfahren wird bevorzugt zur Herstellung von farbgebenden Mehrschichtlackierungen, effektgebenden Lackierungen und farb- und effektgebenden Lackierungen eingesetzt.

Die Applikation des erfindungsgemäß eingesetzten pigmentierten wässrigen Basislacks erfolgt üblicherweise auf mit Füller oder Grundierfüller vorbehandelte Metall- oder Kunststoffsubstrate. Gegebenenfalls kann der besagte Basislack auch direkt auf dem Kunststoffuntergrund aufgebracht werden.

Soll ein Metallsubstrat beschichtet werden, so wir dieses vor der Applikation des Füllers oder Grundierfüllers bevorzugt noch mit einer Elektrotauchlackierung beschichtet.

Wird ein Kunststoffsubstrat beschichtet, so wird dieses vor der Applikation des Füllers oder Grundierfüllers bevorzugt noch vorbehandelt. Die hierzu am häufigsten angewendeten Verfahren sind das Beflammen, die Plasmabehandlung und die Corona-Entladung. Bevorzugt wird das Beflammen eingesetzt.

Die Applikation des erfindungsgemäßen pigmentierten wässrigen Basislacks auf ein Metallsubstrat kann in den im Rahmen der Automobilindustrie üblichen Schichtdicken im Bereich von beispielsweise 5 bis 100 Mikrometer, bevorzugt 5 bis 60 Mikrometer erfolgen. Dabei werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen.

Nach der Applikation des pigmentierten wässrigen Basislacks kann dieser nach bekannten Methoden getrocknet werden. Beispielsweise können (1-Komponenten)-Basislacke, welche bevorzugt sind, bei Raumtemperatur für 1 bis 60 Minuten abgelüftet werden und darauf folgend bevorzugt bei gegebenenfalls leicht erhöhten Temperaturen von 30 bis 90°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer, liegen.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch bei Temperaturen von 60 bis 200°C. Als thermisch härtende Basislacke sind solche bevorzugt, die als zusätzliches Bindemittel ein Polyurethanharz und als Vernetzungsmittel ein Aminoplastharz oder ein blockiertes oder unblockiertes Polyisocyanat, bevorzugt ein Aminoplasthatz, enthalten. Unter den Aminoplastharzen sind Melaminharze bevorzugt.

Die Beschichtung von Kunststoffsubstraten erfolgt im Grunde genommen analog zu der von Metallsubstraten. Allerdings wird hier im Allgemeinen bei deutlich niedrigeren Temperaturen von 30 bis 90 °C gehärtet. Bevorzugt ist daher der Einsatz von Zweikomponentenklarlacken. Ferner werden bevorzugt Basislacke eingesetzt, welche als Bindemittel ein Polyurethanharz aber keinen Vernetzer enthalten.

Mit Hilfe des erfindungsgemäßen Verfahrens können metallische und nichtmetallische Substrate, insbesondere Kunststoffsubstrate, vorzugsweise Automobilkarosserien oder Teile davon lackiert werden.

Das erfindungsgemäße Verfahren kann ferner zur Doppellackierung in der OEM-Lackierung eingesetzt werden. Darunter ist zu verstehen, dass ein Substrat, welches mit Hilfe des erfindungsgemäßen Verfahrens beschichtet wurde, ein zweites Mal, ebenfalls mit Hilfe des erfindungsgemäßen Verfahrens, lackiert wird.

Die Erfindung betrifft ferner Mehrschichtlackierungen, welche nach dem oben beschriebenen Verfahren herstellbar sind. Diese Mehrschichtlackierungen sollen im Folgenden als erfindungsgemäße Mehrschichtlackierungen bezeichnet werden.

Alle vorstehend genannten Ausführungen hinsichtlich des erfindungsgemäßen Reaktionsprodukts, des pigmentierten wässrigen Basislacks und des erfindungsgemäßen Verfahrens gelten entsprechend auch für die besagte Mehrschichtlackierung. Dies gilt insbesondere auch für alle bevorzugten, besonders bevorzugten und ganz besonders bevorzugten Merkmale.

Bevorzugt handelt es sich bei den erfindungsgemäßen Mehrschichtlackierungen um farbgebende Mehrschichtlackierungen, effektgebenden Lackierungen und farb- und effektgebenden Lackierungen.

Ein weiterer Aspekt der Erfindung betrifft das erfindungsgemäße Verfahren, wobei es sich bei dem besagten Substrat aus Stufe (1) um eine Mehrschichtlackierung handelt, welche Fehlstellen besitzt. Bei dieser Substrat-Mehrschichtlackierung, welche Fehlstellen besitzt, handelt es sich also um eine Originallackierung, welche ausgebessert oder komplett überlackiert werden soll.

Das erfindungsgemäße Verfahren eignet sich demnach zur Ausbesserung von Fehlstellen auf Mehrschichtlackierungen. Als Fehlstellen beziehungsweise Filmfehler werden im Allgemeinen Störungen an und in der Beschichtung, die meist nach ihrer Form oder ihrem Aussehen benannt werden, bezeichnet. Dem Fachmann ist eine Vielzahl von möglichen Arten von solchen Filmfehlern bekannt. Diese werden beispielsweise in Römpp-Lexikon Lacke und Druckfarben, Georg Thieme Verlag, Stuttgart, New York, 1998, Seite 235,"Filmfehler" beschrieben.

Die mit Hilfe des erfindungsgemäßen Verfahrens hergestellten Mehrschichtlackierungen können ebenfalls solche Fehlstellen aufweisen. In einer bevorzugten Ausführungsform des erfindungsgemäßen Verfahrens handelt es sich bei dem Substrat aus Stufe (1) daher um eine erfindungsgemäße Mehrschichtlackierung, welche Fehlstellen aufweist.

Diese Mehrschichtlackierungen werden bevorzugt auf Automobilkarossen oder Teilen davon mit Hilfe des oben bezeichneten erfindungsgemäßen Verfahrens im Rahmen der Automobilserienlackierung hergestellt. Treten solche Fehlstellen direkt nach erfolgter OEM-Lackierung auf, so werden diese direkt ausgebessert. Man spricht daher auch von OEM-Automobilreparaturlackierung. Sind nur kleine Fehlstellen auszubessern, so wird nicht die ganze Karosse komplett überlackiert (Doppellackierung), sondern nur der sogenannte "Spot" repariert. Letzterer Prozess wird "Spot Repair" genannt. Besonders bevorzugt ist daher der Einsatz des erfindungsgemäßen Verfahrens zum Ausbessern von Fehlstellen auf erfindungsgemäßen Mehrschichtlackierungen (Originallackierungen) in der OEM-Automobilreparaturlackierung.

Sofern im Rahmen der vorliegenden Erfindung der Bereich der Automobilreparaturlackierung angesprochen ist, das heißt also von der Ausbesserung von Fehlstellen die Rede ist, und dabei als Substrat eine Mehrschichtlackierung, welche Fehlstellen besitzt, genannt wird, ist hiermit selbstverständlich gemeint, dass diese Substrat-Mehrschichtlackierung mit Fehlstellen (Originallackierung) in der Regel auf einem wie oben beschriebenen Metallsubstrat oder einem Kunststoffsubstrat angeordnet ist.

Damit die ausgebesserte Stelle sich farblich nicht vom Rest der Originallackierung unterscheidet, ist es bevorzugt, dass der in Stufe (1) des erfindungsgemäßen Verfahrens zur Ausbesserung von Fehlstellen eingesetzte wässrige Basislack derselbe ist, wie der, der zur Herstellung der Substrat-Mehrschichtlackierung mit Fehlstellen (Originallackierung) eingesetzt wurde.

Die vorstehend genannten Ausführungen bezüglich des erfindungsgemäßen Polymers und des wässrigen pigmentierten Basislacks gelten somit auch für den in Rede stehenden Einsatz des erfindungsgemäßen Verfahrens zum Ausbessern von Fehlstellen auf einer mehrschichtigen Lackierung. Dies gilt insbesondere auch für alle genannten bevorzugten, besonders bevorzugten und ganz besonders bevorzugten Merkmale. Es ist weiterhin bevorzugt, dass es sich bei den auszubessernden, erfindungsgemäßen Mehrschichtlackierungen um farbgebende Mehrschichtlackierungen, effektgebenden Lackierungen und farb- und effektgebenden Lackierungen handelt.

Die oben beschriebenen Fehlstellen auf der erfindungsgemäßen Mehrschichtlackierung lassen sich mit Hilfe des vorstehend beschriebenen erfindungsgemäßen Verfahrens ausbessern. Hierzu kann die auszubessernde Oberfläche der Mehrschichtlackierung zunächst angeschliffen werden. Bevorzugt wird das Anschleifen so ausgeführt, dass von der Originallackierung nur die Basislackierung und die Klarlackierung ab- oder angeschliffen werden, nicht aber die in der Regel darunter angeordnete Füllerschicht und Grundierungsschicht abgeschliffen wird. Auf diese Weise kann bei der Reparatur insbesondere auf die erneute Applikation von speziellen Grundierungen und Grundierfüllern verzichtet werden. Diese Form des Anschleifens hat sich insbesondere im Bereich der OEM-Automobilreparaturlackierung bewährt, da hier im Gegensatz zur Reparatur in einer Werkstatt in der Regel nur Fehlstellen im Schichtbereich Basislack und/oder Klarlack auftreten, jedoch insbesondere keine Fehlstellen im Bereich der darunter angeordneten Füller- und Grundierungsschichten auftreten. Fehlstellen in den letztgenannten Schichten sind eher im Bereich der Reparatur in Werkstätten anzutreffen. Beispielhaft seien Lackschäden wie Kratzer genannt, welche beispielsweise durch mechanische Einflüsse erzeugt werden und oft bis auf die Substratoberfläche (Metall- oder Kunststoffsubstrat) reichen.

Nach dem Anschleifen erfolgt die Applikation des pigmentierten wässrigen Basislacks auf die Fehlstelle in der Originallackierung durch pneumatische Zerstäubung. Nach der Applikation des pigmentierten wässrigen Basislacks kann dieser nach bekannten Methoden getrocknet werden. Beispielsweise kann der Basislack bei Raumtemperatur für 1 bis 60 Minuten getrocknet werden und darauf folgend bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack noch nicht vollständig gehärtet wird. Im Rahmen der vorliegenden Erfindung ist es bevorzugt, dass der Basislack als Bindemittel ein Polyurethanharz und als Vernetzungsmittel ein Aminoplastharz, bevorzugt ein Melaminharz, enthält.

Anschließend wird ein handelsüblicher Klarlack nach ebenfalls gängigen Methoden appliziert. Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet.

Beim so genannten Niedrigtemperatureinbrennen erfolgt die Härtung vorzugsweise bei Temperaturen von 20 bis 90°C. Hier werden bevorzugt Zweikomponentenklarlacke eingesetzt. Wird, wie oben beschrieben, als weiteres Bindemittel ein Polyurethanharz und als Vernetzungsmittel ein Aminoplastharz eingesetzt, so kommt es bei diesen Temperaturen in der Basislackschicht nur zu einer geringen Vernetzung durch das Aminoplastharz. Neben seiner Funktion als Härter dient das Aminoplastharz hierbei auch der Plastifizierung und kann die Pigmentbenetzung unterstützen. Neben den Aminoplastharzen können auch unblockierte Isocyanate eingesetzt werden. Diese vernetzen je nach Art des eingesetzten Isocyanats schon bei Temperaturen ab 20 °C.

Beim sogenannten Hochtemperatureinbrennen erfolgt die Härtung vorzugsweise bei Temperaturen von 130 bis 150°C. Hier werden sowohl Einkomponenten- als auch Zweikomponentenklarlacke eingesetzt. Wird, wie oben beschrieben, als weiteres Bindemittel ein Polyurethanharz und als Vernetzungsmittel ein Aminoplastharz eingesetzt, so kommt es bei diesen Temperaturen in der Basislackschicht zu einer Vernetzung durch das Aminoplastharz.

Im Rahmen der Ausbesserung von Fehlstellen auf Mehrschichtlackierungen, das heißt also, wenn das Substrat eine Fehlstellen aufweisende Originallackierung darstellt, bevorzugt eine erfindungsgemäße Fehlstellen aufweisende Mehrschichtlackierung, wird bevorzugt das Niedrigtemperatureinbrennen angewendet.

Ein weiterer Aspekt der vorliegenden Erfindung ist die Verwendung des erfindungsgemäßen Reaktionsprodukts in pigmentierten wässrigen Basislacken zur Haftungsverbesserung. Hierunter ist die Haftungsverbesserung gegenüber solchen pigmentierten wässrigen Basislacken zu verstehen, die kein erfindungsgemäßes Reaktionsprodukt enthalten.

Das erfindungsgemäße Reaktionsprodukt kann zur Haftungsverbesserung bei der Lackierung von Metall- und Kunststoffsubstraten eingesetzt werden. Ebenso lässt es sich in der Autoreparaturlackierung einsetzen. Unter Autoreparaturlackierung ist sowohl die OEM-Automobilreparaturlackierung als auch die Automobilreparaturlackierung gemeint, welche beispielsweise in einer Werkstatt stattfindet.

Werden die besagten pigmentierten wässrigen Basislacke bei der Lackierung von Metall- und Kunststoffsubstraten eingesetzt, so führt der Einsatz des erfindungsgemäßen Reaktionsprodukts insbesondere zu einer Verbesserung der Haftung zwischen der Basislackschicht und der unmittelbar an diese angrenzende Klarlackschicht. Das erfindungsgemäße Reaktionsprodukt wird daher bevorzugt zur Haftungsverbesserung zwischen Basislackschicht und Klarlackschicht bei der Lackierung von Metallsubstraten und Kunststoffsubstraten verwendet.

Werden die besagten pigmentierten wässrigen Basislacke bei der Autoreparaturlackierung eingesetzt, so führt der Einsatz des erfindungsgemäßen Reaktionsprodukts insbesondere zu einer Haftungsverbesserung zwischen Basislack und Erstlackierung. Das erfindungsgemäße Reaktionsprodukt wird daher ebenfalls bevorzugt zur Verbesserung der Haftung zwischen Basislackschicht und Erstlackierung in der Autoreparaturlackierung, besonders bevorzugt in der OEM-Automobilreparaturlackierung verwendet.

Die Haftungsproblematik bei Systemen des Stands der Technik ist insbesondere dann eklatant, wenn die beschichteten Substrate der Witterung ausgesetzt sind. Entsprechende Witterungsverhältnisse lassen sich durch eine sogenannte Schwitzwasserlagerung simulieren. Der Begriff Schwitzwasserlagerung bezeichnet die Lagerung von beschichteten Substraten in einer Klimakammer nach Prüfklima CH nach DIN EN ISO 6270-2:2005-09.

Die erfindungsgemäßen Reaktionsprodukte werden daher insbesondere auch verwendet, um die Haftung nach einer Schwitzwasserlagerung zu verbessern. Die Haftung wird bevorzugt mittels Dampfstrahltest nach Prüfverfahren A der DIN 55662:2009-12 untersucht.

Wenn beschichtete Substrate der Witterung ausgesetzt sind, dann manifestiert sich eine schlechte Haftung insbesondere auch im Auftreten von Blasen und Quellungen. Die erfindungsgemäßen Reaktionsprodukte werden daher insbesondere auch verwendet, um das Auftreten von Blasen und Quellungen in Mehrschichtlackierungen zu reduzieren oder zu verhindern. Das Vorliegen von Blasen und Quellungen kann dabei visuell begutachtet werden.

Im Folgenden wird die Erfindung anhand von Beispielen erläutert.

### Beispiele

### Spezifizierung bestimmter eingesetzter Komponenten und Messmethoden

### Dimerfettsäure:

Die eingesetzte Dimerfettsäure enthält weniger als 1,5 Gew.-% trimere Moleküle, 98 Gew.-% dimere Moleküle und kleiner 0,3 Gew.-%Fettsäure (Monomer). Sie wird auf der Basis von Linolen-, Linol- und Ölsäure hergestellt (Pripol^{™} 1012-LQ-(GD) (Fa. Croda).

### Polyester 1 (P1):

Hergestellt gemäß Beispiel D, Spalte 16, Z. 37 bis 59 der DE 4009858 A. Die entsprechende Lösung des Polyesters hat einen Festkörpergehalt von 60 Gew.-%, wobei als Lösemittel Butylglykol anstatt Butanol verwendet wurde, das heißt als Lösemittel hauptsächlich Butylglykol und Wasser enthalten sind.

### Bestimmung des zahlenmittleren Molekulargewichts:

Das zahlenmittlere Molekulargewicht wurde mittels Dampfdruckosmose bestimmt. Gemessen wurde mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin Benzil als Eichsubstanz eingesetzt wurde).

### Herstellung eines erfindungsgemäßen Reaktionsprodukts (ER1):

In einem 4 I Edelstahlreaktor, ausgestattet mit Ankerrührer, Thermometer, Kühler, Thermometer zur Kopftemperaturmessung und Wasserabscheider wurden 861,8 g lineares, diolisches PolyTHF3000 mit einer OH-Zahl von 37,4 mg KOH / g (0,2873 mol), 83,2 g Dimerfettsäure (0,1436 mol) und 29,3 g Xylol in Anwesenheit von 0,8 g Di-n-butylzinnoxid (Axion^{®} CS 2455, Fa. Chemtura) auf 100°C aufgeheizt. Es wurde langsam weitergeheizt bis zum Einsetzen der Kondensation. Bei einer maximalen Kopftemperatur von 85°C wurde dann schrittweise bis auf 200°C weitergeheizt. Der Reaktionsfortschritt wurde über die Bestimmung der Säurezahl verfolgt. Nach Erreichen einer Säurezahl von ≤ 1,5 mg KOH/g wurde noch vorhandenes Xylol unter Vakuum abdestilliert. Man erhielt nach 24 Stunden ein bei Raumtemperatur festes Polymer. Mittels Gaschromatographie wurde ein Xylol - Gehalt kleiner 0,1% bestimmt.
Kondensatmenge (Wasser): 6,2 g
Säurezahl: 0,6 mg KOH / g
Feststoffgehalt (GC): 100,0 %
Zahlenmittleres Molekulargewicht: 6450 g/mol
Viskosität (Harz : Xylol = 2 : 1): 2330 mPas,
(gemessen bei 23°C mit einem Rotationsviskosimeter der Fa. Brookfield, Typ CAP 2000+, Spindel 3, Scherrate: 10000 s⁻¹)

### Herstellung von wässrigen Basislacken

### Herstellung eines silbernen Vergleich-Wasserbasislacks 1 (V1)

Die in der Tabelle A unter "wässrige Phase" aufgeführten Komponenten wurden in angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle A:**

| Komponente | Gewichtsteile |
|---|---|
| **Wässrige Phase** | |
| 3%ige Na-Mg-Schichtsilikatlösung | 26 |
| Deionisiertes Wasser | 13,6 |
| Butylglykol | 2,8 |
| Polyurethanmodifiziertes Polyacrylat; hergestellt gemäß S. 7, Z. 55 bis S.B, Z. 23 der DE 4437535 A | 4,5 |
| 50 Gew.-%ige Lösung Rheovis PU 1250 (BASF), Rheologiemittel | 0,6 |
| P1 | 3,2 |
| Tensid S (BASF) | 0,3 |
| Melaminformaldehydharz (Cymel 203 von Cytec) | 4,1 |
| 10%iges Dimethylethanolamin in Wasser | 0,3 |
| Pfropfmischpolymerisat auf Polyurethanbasis; hergestellt gemäß S. 19, Z. 44 bis S. 20, Z. 21 der DE 19948004 A | 20,4 |
| Tensid S (BASF) | 1,6 |
| 3 Gew.-%ige wässrige Rheovis AS S130 Lösung; Rheologiemittel, erhältlich von BASF | 3,9 |

| **Organische Phase** | |
|---|---|
| Mischung zweier handelsüblicher Aluminiumpigmente, erhältlich von Firma Altana-Eckart | 6,2 |
| Butylglykol | 7,5 |
| P1 | 5 |

### Herstellung eines erfindungsgemäßen Wasserbasislacks 1 (E1)

Zur Herstellung des erfindungsgemäßen Wasserbasislacks E1 wurde ein Lack analog der Herstellung des Vergleichs-Wasserbasislacks 1 (V1) hergestellt, wobei anstelle des Polyesters P1 sowohl in der wässrigen Phase als auch in der organischen Phase ER1 eingesetzt wurde. ER1 wurde dabei als 80%-ige Lösung in Butylglykol eingesetzt. Bezogen auf den Festkörperanteil (nicht-flüchtigen Anteil) wurde in E1 dieselbe Menge ER1 eingesetzt, wie in V1 der Polyester P1 eingesetzt wurde. Die durch den unterschiedlichen Festkörper der Dispersionen P1 und ER1 bedingten unterschiedlichen Mengen an Butylglykol wurden in der Formulierung E1 durch entsprechenden Zusatz von Butylglykol ausgeglichen.

Tabelle 1 zeigt nochmals die in den Wasserbasislacken V1 und E1 eingesetzten Polyester und Reaktionsprodukte sowie deren Anteile (bezogen auf die Gesamtmenge der Wasserbasislacke) als Übersicht.

**Tabelle 1: Zusammensetzungen der Wasserbasislacke (WBL) V1 und E1**

| **WBL** | **[Gew.-%]** | **Polyester/Reaktionsprodukt** |
|---|---|---|
| V1 | 4,92 | P1 |
| E1 | 4,92 | ER1 |

### Herstellung von Mehrschichtlackierungen und anwendungstechnische Untersuchung der Mehrschichtlackierungen

Zur Bestimmung der Stabilität gegen das Auftreten von Blasen und Quellungen nach Schwitzwasserlagerung wurden Mehrschichtlackierungen nach der folgenden allgemeinen Vorschrift hergestellt.

Ein mit einer Standard-KTL (Cathoguard^{®} 800 der Firma BASF Coatings GmbH) beschichtetes Stahlblech der Abmessungen 10 x 20 cm wurde mit einem Standard-Füller (ALG 670173 - Füller mittelgrau der Firma Hemmelrath) beschichtet. Nach Zwischentrocknen des wässrigen Füllers über einen Zeitraum von 10 Minuten bei 80°C wurde der Füller bei einer Temperatur von 190°C über einen Zeitraum von 30 Minuten eingebrannt.

Der jeweilige Wasserbasislack gemäß Tabelle 1 wurde nun pneumatisch appliziert. Die resultierende Wasserbasislackschicht wurde 2 Minuten bei Raumtemperatur abgelüftet und anschließend während 10 Minuten im Umluftofen bei 70°C getrocknet. Auf die getrocknete Wasserbasislackschicht wurde ein üblicher Zweikomponentenklarlack appliziert (Progloss^{®} 345 der Firma BASF Coatings GmbH). Die resultierende Klarlackschicht wurde während 20 Minuten bei Raumtemperatur abgelüftet. Anschließend wurden die Wasserbasislackschicht und die Klarlackschicht in einem Umluftofen während 30 Minuten bei 160°C gehärtet. Der vorliegende Aufbau stellt einen überbrannten Originalaufbau dar und wird im Weiteren als Originallackierung bezeichnet.

Diese Originallackierung wird mit einem Schleifpapier angeschliffen und anschließend der jeweilige Wasserbasislack gemäß Tabelle 1 auf diese angeschliffene Originallackierung pneumatisch appliziert. Die resultierende Wasserbasislackschicht wurde 2 Minuten bei Raumtemperatur abgelüftet und anschließend während 10 Minuten im Umluftofen bei 70°C getrocknet. Auf die getrocknete Wasserbasislackschicht wurde ein sogenannter 80°C-Zweikomponentenklarlack (FF230500 2K Reparaturklarlack, kratzfest der Firma BASF Coatings GmbH) aufgebracht. Die resultierende Klarlackschicht wurde während 20 Minuten bei Raumtemperatur abgelüftet. Anschließend wurden die Wasserbasislackschicht und die Klarlackschicht in einem Umluftofen während 30 Minuten bei 80°C gehärtet.

Die so behandelten Stahlbleche wurden nun über einen Zeitraum von 10 Tagen in einer Klimakammer nach Prüfklima CH nach DIN EN ISO 6270-2:2005-09 gelagert. Anschließend wurden die Bleche 24 Stunden nach Entnahme aus der Klimakammer visuell bezüglich Blasenbildung und Quellung untersucht.

Das Auftreten von Blasen wurde folgendermaßen durch eine Kombination von 2 Werten beurteilt:
- Die Anzahl der Blasen wurde durch eine Mengenangabe von 1 bis 5 bewertet, wobei mit m1 sehr wenige und m5 sehr viele Blasen bezeichnet wurden.
- Die Größe der Blasen wurde durch eine Größenangabe ebenfalls von 1 bis 5 bewertet, wobei mit g1 sehr kleine und g5 sehr große Blasen bezeichnet wurden.
- Die Bezeichnung m0g0 bedeutet demzufolge eine blasenfreie Lackierung nach Schwitzwasserlagerung und stellt bezüglich Blasenbildung ein "in Ordnung"-Ergebnis dar.

Tabelle 2 zeigt die entsprechenden Ergebnisse für die Wasserbasislacke V1 und E1.

**Tabelle 2: Blasenbildung und Quellung von Mehrschichtlackierungen, die unter Einsatz der Wasserbasislacke V1 und E1 hergestellt wurden**

| **WBL** | **Blasenbildung** | **Quellung** | **Beurteilung** |
|---|---|---|---|
| V1 | m5g1 | keine | niO |
| E1 | m0g0 | keine | iO |

| | | | |
|---|---|---|---|
| Erklärung: m = Anzahl an Blasen g = Größe der Blasen iO = zufriedenstellendes Ergebnis niO = nicht zufriedenstellendes Ergebnis | | | |

Die Ergebnisse bestätigen, dass bei Einsatz der erfindungsgemäßen Reaktionsprodukte keine Blasen nach Schwitzwasserbelastung mehr auftreten und keine Quellungen mehr sichtbar sind.

### Herstellung eines silbernen Vergleich-Wasserbasislacks 2 (V2)

Die in der Tabelle B unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle B:**

| Komponente | Gewichtsteile |
|---|---|
| **Wässrige Phase** | |
| 3%ige Na-Mg-Schichtsilikatlösung | 26 |
| Deionisiertes Wasser | 21,7 |
| Butylglykol | 2,8 |
| Polyurethanmodifiziertes Polyacrylat; hergestellt gemäß S. 7, Z. 55 bis S.8, Z. 23 der DE 4437535 A | 4,5 |
| 50 Gew.-%ige Lösung Rheovis PU 1250 (BASF), Rheologiemittel | 0,6 |
| P1 | 13,3 |
| Tensid S (BASF) | 0,3 |
| Melaminformaldehydharz (Cymel 203 von Cytec) | 4,1 |
| 10%iges Dimethylethanolamin in Wasser | 0,3 |
| Pfropfmischpolymerisat auf Polyurethanbasis; hergestellt gemäß S. 19, Z. 44 bis S. 20, Z. 21 der DE 19948004 A | 1,8 |
| Tensid S (BASF) | 1,6 |
| 3 Gew.-%ige wässrige Rheovis AS S130 Lösung; Rheologiemittel, erhältlich von BASF | 3,9 |

| **Organische Phase** | |
|---|---|
| Mischung zweier handelsüblicher Aluminiumpigmente, erhältlich von Firma Altana-Eckart | 6,2 |
| Butylglykol | 7,5 |
| P1 | 5 |

### Herstellung eines erfindungsgemäßen Wasserbasislacks 2 (E2)

Zur Herstellung des erfindungsgemäßen Wasserbasislacks E2 wurde ein Lack analog der Herstellung des Vergleichs-Wasserbasislacks 2 (V2) hergestellt, wobei anstelle des Polyesters P1 sowohl in der wässrigen Phase als auch in der organischen Phase ER1 eingesetzt wurde. ER1 wurde dabei als 80%-ige Lösung in Butylglykol eingesetzt. Bezogen auf den Festkörperanteil (nicht-flüchtigen Anteil) wurde in E2 dieselbe Menge ER1 eingesetzt, wie in V2 der Polyester P1 eingesetzt wurde. Die durch den unterschiedlichen Festkörper der Dispersionen P1 und ER1 bedingten unterschiedlichen Mengen an Butylglykol wurden in der Formulierung E2 durch entsprechenden Zusatz von Butylglykol ausgeglichen.

Tabelle 3 zeigt nochmals die in den Wasserbasislacken V2 und E2 eingesetzten Polyester und Reaktionsprodukte sowie deren Anteile (bezogen auf die Gesamtmenge der Wasserbasislacke) als Übersicht.

**Tabelle 3: Zusammensetzungen der Wasserbasislacke V2 und E2**

| **WBL** | **[Gew.-%]** | **Polyester/Reaktionsprodukt** |
|---|---|---|
| V2 | 10,98 | P1 |
| E2 | 10,98 | ER1 |

### Herstellung von Mehrschichtlackierungen und anwendungstechnische Untersuchung der Mehrschichtlackierungen

Unter Einsatz der Wasserbasislacke V2 und E2 wurden analog den oben angeführten Protokollen entsprechende Mehrschichtlackierungen (Originallackierungen) hergestellt, angeschliffen, und wiederum überlackiert. Anschließend erfolgte wiederum die schon beschriebene Untersuchung der Blasenbildung und Quellung.

Tabelle 4 zeigt die entsprechenden Ergebnisse.

**Tabelle 4: Blasenbildung und Quellung von Mehrschichtlackierungen, die unter Einsatz der Wasserbasislacke V2 und E2 hergestellt wurden**

| **WBL** | **Blasenbildung** | **Quellung** | **Beurteilung** |
|---|---|---|---|
| 2 | m5g4 | keine | niO |
| E2 | m0g0 | keine | iO |

| | | | |
|---|---|---|---|
| Erklärung: m = Anzahl an Blasen g = Größe der Blasen iO = zufriedenstellendes Ergebnis niO = nicht zufriedenstellendes Ergebnis | | | |

Die Ergebnisse bestätigen wiederum, dass bei Einsatz der erfindungsgemäßen Reaktionsprodukte keine Blasen nach Schwitzwasserbelastung mehr auftreten und keine Quellungen mehr sichtbar sind. Ferner sind die Eigenschaften gegenüber dem Einsatz eines Standardesters (P1) deutlich verbessert.

## Patentansprüche

1. Dimerfettsäure-Polyether-Reaktionsprodukt, herstellbar durch Umsetzung von
(a) Dimerfettsäuren mit
(b) mindestens einem Polyether der allgemeinen Strukturformel (I) 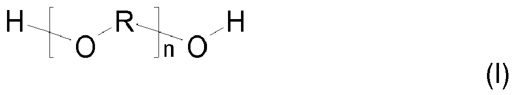 wobei es sich bei R um einen C₃- bis C₆-Alkylenrest handelt und n entsprechend so gewählt ist, dass der Polyether (b) ein zahlenmittleres Molekulargewicht von 2250 bis 6000 g/mol besitzt, die Komponenten (a) und (b) in einem molaren Verhältnis von 0,7/2,3 bis 1,6/1,7 eingesetzt werden und das resultierende Reaktionsprodukt ein zahlenmittleres Molekulargewicht von 4800 bis 40000 g/mol und eine Säurezahl von kleiner 10 mg KOH/g besitzt.

2. Reaktionsprodukt gemäß Anspruch 1, **dadurch gekennzeichnet, dass** die eingesetzten Dimerfettsäuren zu mindestens 90 Gew.-% aus dimeren Molekülen, weniger als 5 Gew.-% aus trimeren Molekülen und zu weniger als 5 Gew.-% aus monomeren Molekülen und sonstigen Nebenprodukten bestehen.

3. Reaktionsprodukt nach Anspruch 1, **dadurch gekennzeichnet, dass** der Polyether (b) ein zahlenmittleres Molekulargewicht von 2400 bis 5200 g/mol besitzt.

4. Reaktionsprodukt nach einem der Ansprüche 1 bis 3, **dadurch gekennzeichnet, dass** es sich bei der Gruppe R gemäß der allgemeinen Strukturformel (I) um iso-Propylenreste oder Tetramethylenreste handelt und der Polyether (b) ein zahlenmittleres Molekulargewicht von 2500 bis 4800 g/mol besitzt.

5. Reaktionsprodukt nach einem der Ansprüche 1 bis 4, **dadurch gekennzeichnet, dass** die Komponenten (a) und (b) in einem molaren Verhältnis von 0,9/2,1 bis 1,5/1,8 eingesetzt werden.

6. Reaktionsprodukt nach einem der Ansprüche 1 bis 5, **dadurch gekennzeichnet, dass** dieses ein zahlenmittleres Molekulargewicht von 5000 bis 30000 g/mol besitzt.

7. Pigmentierter wässriger Basislack, **dadurch gekennzeichnet, dass** er mindestens ein Reaktionsprodukt nach einem der Ansprüche 1 bis 6 enthält.

8. Pigmentierter wässriger Basislack gemäß Anspruch 7, **dadurch gekennzeichnet, dass** die Summe über die gewichtsprozentualen Anteile, bezogen auf das Gesamtgewicht des pigmentierten wässrigen Basislacks, aller erfindungsgemäßen Reaktionsprodukte 0,1 bis 30 Gew.-% beträgt.

9. Pigmentierter wässriger Basislack nach Anspruch 7 oder 8, **dadurch gekennzeichnet, dass** er als weiteres Bindemittel mindestens ein Polyurethanharz enthält.

10. Pigmentierter wässriger Basislack nach einem der Ansprüche 7 bis 9, **dadurch gekennzeichnet, dass** er ein mittels olefinisch ungesättigten Monomeren gepfropftes Polyurethanharz, welches zudem Hydroxylgruppen enthält, sowie ein Melaminharz umfasst.

11. Verwendung eines Reaktionsprodukts gemäß einem der Ansprüche 1 bis 6 in pigmentierten wässrigen Basislacken zur Haftungsverbesserung.

12. Verfahren zur Herstellung einer mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
**dadurch gekennzeichnet, dass** in Stufe (1) ein pigmentierter wässriger Basislack gemäß einem der Ansprüche 7 bis 10 eingesetzt wird.

13. Verfahren nach Anspruch 12, **dadurch gekennzeichnet, dass** es sich bei dem Substrat aus Stufe (1) um eine Mehrschichtlackierung handelt, welche Fehlstellen besitzt.

14. Mehrschichtlackierung, herstellbar nach dem Verfahren gemäß Anspruch 12.

15. Verfahren nach Anspruch 13, **dadurch gekennzeichnet, dass** es sich bei der als Substrat eingesetzten und Fehlstellen aufweisenden Mehrschichtlackierung um eine solche gemäß Anspruch 14 handelt.
